# EUROPÄISCHE PATENTANMELDUNG

(11) **EP 4 773 374 A1**
(43) Veröffentlichungstag der Anmeldung: **08.07.2026**
(21) Anmeldenummer: 25222722.8
(22) Anmeldetag: 11.12.2025
(51) Int. Cl.: H01M 50/244, H01M 50/258, H01M 50/264, H01M 50/291, H01M 50/293, H01M 50/289

(54) **BATTERIESYSTEM UND VERFAHREN ZUR MONTAGE EINES SOLCHEN BATTERIESYSTEMS**

(30) Priorität: 03.01.2025 DE 102025100107; 17.03.2025 DE 102025110089
(71) Anmelder: Volkswagen Aktiengesellschaft, 38440 Wolfsburg (DE)
(72) Erfinder: Neumann, Niklas, 38440 Wolfsburg (DE); Rathnakumar, Ranjithkumar, 38440 Wolfsburg (DE); Cohrs, Malte, 38440 Wolfsburg (DE)

(57) **Zusammenfassung**

Ein Batteriesystem mit mindestens einer Batteriezelle (9), die in einer Haltestruktur durch mindestens eine Klebeverbindung befestigt aufgenommen ist, ist durch mindestens ein Abstandselement (25) gekennzeichnet, das eine erste Anlagefläche (28) zur Anlage an der Batteriezelle (9) und eine zweite Anlagefläche (29) zur Anlage an der Haltstruktur ausbildet, wobei durch das Abstandselement (25) mindestens ein Klebstoffaufnahmeraum (30) ausgebildet ist, der mit einem Klebstoff gefüllt ist.

## Beschreibung

Die Erfindung betrifft ein Batteriesystem mit mindestens einer Batteriezelle, die in einer Haltestruktur durch mindestens eine Klebeverbindung befestigt aufgenommen ist. Die Erfindung betrifft weiterhin ein Verfahren zur Montage eines solchen Batteriesystems.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird. Eine Batterie kann eine oder, üblicherweise, mehrere Batterieelemente umfassen, die, zur Ausbildung einer Batteriezelle, innerhalb einer Umhüllung, üblicherweise in Form einer häufig als "Pouch" bezeichneten Folienumhüllung oder eines Gehäuses, angeordnet sind. Die Batterieelemente können jeweils zwei Elektroden, einen zwischen den Elektroden angeordneten Separator zur elektrischen Separierung der Elektroden und einen als Ionenleiter dienenden Elektrolyten umfassen.

Bei besonders hohen Leistungsanforderungen, wie dies beispielsweise für eine Traktionsbatterie eines Kraftfahrzeugs gilt, werden eine Vielzahl von Batteriezellen in einer oder mehreren Batteriezellengruppen kombiniert, wobei für die Batteriezellen eine elektrische Reihen- und/oder Parallelschaltung vorgesehen sein kann. Häufig sind die Batteriezellen einer Batteriezellengruppen dabei auch mechanisch miteinander verbunden.

Unter anderem in der Automobilindustrie hat sich das Kleben als eine wichtige und zentrale Fügetechnologie etabliert, die alternative Verbindungsmethoden, wie beispielsweise ein Verschrauben, Vernieten oder Verschweißen, ergänzt oder ersetzt. Der Einsatz von Klebstoffen ermöglicht es, verschiedene Materialien effizient und dauerhaft miteinander zu verbinden.

Das mechanische Anbinden von Batteriezellen oder anderen Energiespeichern mittels Klebstoffs in Kraftfahrzeugen ist ein spezifischer Anwendungsfall, der bedingt durch hohe mechanische Anforderungen, geringe Platzverhältnisse, elektrische Potenziale und unterschiedliche zu verbindende Materialien besondere konstruktive Herausforderung mit sich bringt.

Die EP 3 675 204 A1 und die EP 3 675 217 A1 offenbaren jeweils ein Batteriemodul, bei dem eine Mehrzahl von Batteriezellen in einem wannenförmigen Modulgehäuse verklebt sind.

Der Erfindung liegt die Aufgabe zugrunde, eine vorteilhafte Möglichkeit zum Verkleben von Batteriezellen in einer Haltestruktur eines Batteriesystems aufzuzeigen.

Diese Aufgabe ist bei einem Batteriesystem gemäß dem Patentanspruch 1 gelöst. Ein Verfahren zur Montage eines solchen Batteriesystems ist Gegenstand des Patentanspruchs 18. Bevorzugte Ausgestaltungsformen des erfindungsgemäßen Batteriesystems und vorteilhafte Ausführungsformen des erfindungsgemäßen Verfahrens sind Gegenstände der weiteren Patentansprüche und ergeben sich aus der nachfolgenden Beschreibung der Erfindung.

Erfindungsgemäß ist ein Batteriesystem vorgesehen, das mindestens eine Batteriezelle, vorzugsweise eine Mehrzahl von Batteriezellen, umfasst, die in einer Haltestruktur durch mindestens eine Klebeverbindung befestigt aufgenommen ist/sind. Bei der/den Batteriezelle(n) kann es sich insbesondere um (eine) Lithiumionen-Batteriezelle(n) handeln. Weiterhin umfasst das Batteriesystem mindestens ein Abstandselement, das eine erste Anlagefläche zur (direkten) Anlage an der mindestens einen Batteriezelle und eine zweite Anlagefläche zur (direkten) Anlage an der Haltstruktur ausbildet, so dass zwischen der Batteriezelle und der Haltstruktur ein Abstand ausgebildet ist und damit durch das Abstandselement mindestens ein Klebstoffaufnahmeraum ausgebildet ist, der mit einem Klebstoff ausgefüllt ist.

Die mindestens eine Batteriezelle weist (jeweils) eine Mehrzahl von Batterieelementen auf. Die Batterieelemente können jeweils zwei Elektroden, einen zwischen den Elektroden angeordneten Separator zur elektrischen Separierung der Elektroden und einen als Ionenleiter zwischen den Elektroden dienenden Elektrolyten umfassen. Dieser Elektrolyt kann flüssig oder fest ausgestaltet sein und, insbesondere bei einer festen Ausgestaltung, auch als Separator fungieren. Die Batteriezellen weisen weiterhin eine Batteriezellenumhüllung auf, die die Batterieelemente umgibt. Die Batteriezellenumhüllung kann vorzugsweise als Folienumhüllung (sogenannte "Pouch"-Umhüllung) oder als Gehäuse, insbesondere als formstabiles Gehäuse ausgestaltet sein. Als "formstabil" gilt dabei ein Gehäuse, wenn dessen dreidimensionale Form ohne externe Belastung infolge der eigenen Gewichtskraft nicht kollabiert. Vorzugsweise kann ein solches Gehäuse derart formstabil ausgestaltet sein, dass dieses bei einer Belastung durch externe Kräfte, die bei einer normalen Nutzung auftreten, nicht kollabiert und, besonders bevorzugt, auch nicht in einem relevanten Maße deformiert wird. Die Batteriezellen können weiterhin einen ersten Batteriepol und einen zweiten Batteriepol umfassen, wobei die Batteriepole zur elektrischen Anbindung der jeweiligen Batteriezellen an einen externen Stromkreis vorgesehen sind. Dazu können die Batteriepole derart in die Batteriezellenumhüllung integriert sein, dass ein erster Abschnitt davon außerhalb der Batteriezellenumhüllung angeordnet und dadurch für eine Anbindung an den externen Stromkreis zugänglich ist, während ein zweiter, innerhalb der Batteriezellenumhüllung liegender Abschnitt einer elektrischen Verbindung mit den Batterieelementen dient. Dabei kann eine erste Elektrode des (jedes) Batterieelement(s) mit dem ersten Batteriepol und eine zweite Elektrode des (jedes) Batterieelement(s) mit dem zweiten Batteriepol elektrisch verbunden sein.

Durch das Abstandselement eines erfindungsgemäßen Batteriesystems wird ein definierter Abstand zwischen der mindestens einen Batteriezelle und der Haltestruktur und damit auch eine definierte Dicke des Klebstoffs im Bereich der Verbindungsstelle ausgebildet, was sich vorteilhaft hinsichtlich der Klebewirkung auswirkt. Eine zu dünne Klebstoffschicht, die mit einer unzureichenden Klebewirkung einhergehen kann, kann dadurch wirksam verhindert werden.

Gemäß einer bevorzugten Ausgestaltungsform eines erfindungsgemäßen Batteriesystems kann vorgesehen sein, dass das Abstandselement zum einen mit der Batteriezelle einen ersten Klebstoffaufnahmeraum ausbildet, der mit einem ersten Klebstoff bzw. einer ersten Klebstoffmenge gefüllt ist. Zum anderen bildet das Abstandselement mit der Haltstruktur einen zweiten Klebstoffaufnahmeraum aus, der mit einem zweiten Klebstoff bzw. einer zweiten Klebstoffmenge gefüllt ist. Dadurch ist es möglich, optimal angeordnete und ausgelegte Einzelklebeverbindungen einerseits zwischen der mindestens einen Batteriezelle und dem Abstandselement und andererseits zwischen dem Abstandselement und der Haltestruktur auszubilden, wodurch mit einem möglichst geringen und lokal begrenzten Einsatz von Klebstoff eine möglichst vorteilhafte (indirekte) Klebeverbindung zwischen der mindestens einen Batteriezelle und der Haltestruktur realisiert werden kann. Insbesondere ermöglicht eine solche Ausgestaltungsform eines erfindungsgemäßen Batteriesystems auch, dass spezifisch auf die jeweilige Einzelklebeverbindung, insbesondere hinsichtlich der Materialien der zu verklebenden Fügepartner, angepasste Klebstoffe zu verwenden. Dementsprechend kann vorzugsweise vorgesehen sein, dass sich der erste Klebstoff von dem zweiten Klebstoff chemisch unterscheidet.

Weiterhin bevorzugt kann vorgesehen sein, dass der erste Klebstoffaufnahmeraum von dem zweiten Klebstoffaufnahmeraum (vollständig) separiert ist, d.h. diese nicht direkt ineinander übergehen. Dadurch kann insbesondere ein ungewolltes Vermischen von zwei chemisch unterschiedlichen Klebstoffen, die in diesen Klebstoffaufnahmeräumen angeordnet sind, vermieden werden.

Gemäß einer bevorzugten Ausgestaltungsform eines erfindungsgemäßen Batteriesystems kann vorgesehen sein, dass das Abstandselement in zumindest einem Abschnitt plattenförmig ausgebildet ist, wobei mindestens eine Erhebung des plattenförmigen Abschnitts (jeweils) eine der Anlageflächen ausbildet und mindestens eine Durchgangsöffnung und/oder mindestens eine Vertiefung des plattenförmigen Abschnitts den Klebstoffaufnahmeraum oder die Klebstoffaufnahmeräume begrenzt. Dies stellt eine einfach herzustellende Ausgestaltung des Abstandselements dar, die zudem eine exakt definierte Größe des Klebstoffaufnahmeraums oder der Klebstoffaufnahmeräume gewährleisten kann. Zudem kann sich dies vorteilhaft hinsichtlich einer Montage des Batteriesystems auswirken, weil dadurch auf einfache Weise eine möglichst exakt definierte Menge an Klebstoff an einer oder mehreren exakt definierten Positionen angeordnet werden können. Dadurch kann eine Klebeverbindung zwischen der mindestens einen Batteriezelle und der Haltestruktur mit möglichst exakt definierten Eigenschaften realisiert werden. Als "plattenförmig" gilt der Abschnitt des Abstandselements, wenn der diesen ausbildende Körper eine Länge und eine Breite aufweist, die jeweils mindestens das fünffache oder das zehnfache oder das zwanzigfache der (Material-)Höhe beziehungsweise der (Material-)Dicke betragen.

Gemäß einer bevorzugten Ausgestaltungsform eines solchen erfindungsgemäßen Batteriesystems, die sich insbesondere durch eine vorteilhafte Herstellbarkeit auszeichnen kann, kann vorgesehen sein, dass das Abstandselement an zumindest einer Seite, vorzugsweise an zwei einander gegenüberliegenden Seiten (jeweils) eine Vielzahl von beabstandet zueinander angeordneten Erhebungen aufweist, die (jeweils) eine der Anlageflächen ausbilden. Dadurch kann zwischen den Erhebungen jeder Seite eine Vertiefung vorliegen, die (jeweils) zumindest abschnittsweise als Klebstoffaufnahmeraum dient. Besonders bevorzugt kann dann noch vorgesehen sein, dass die Erhebungen kreisflächenförmige Teilanlageflächen ausbilden. Die Erhebungen können demnach insbesondere kegelförmig (mit abgerundetem Kopf) oder kegelstumpfförmig ausgestaltet sein.

Gemäß einer anderen vorteilhaften Ausgestaltungsform eines erfindungsgemäßen Batteriesystems kann vorgesehen sein, dass das Abstandselement eine einzelne länglich, insbesondere geradlinig verlaufende Erhebung oder mehrere länglich, insbesondere geradlinig verlaufende Erhebungen, die vorzugsweise parallel zueinander verlaufen, aufweist. Die längliche(n) Erhebung(en) kann/können dabei vorzugsweise in Richtung einer Längserstreckung oder einer Breitenerstreckung des plattenförmigen Abstandselements verlaufen. Auch ein solches Abstandselement kann sich durch eine vorteilhafte und insbesondere kostengünstige Herstellbarkeit bei gleichzeitig guter Funktionalität auszeichnen.

Sofern das Abstandselement lediglich eine einzelne länglich verlaufende Erhebung aufweist, kann dieses in einem quer und insbesondere senkrecht zu dieser Erhebung verlaufenden Querschnitt V-förmig ausgestaltet sein.

Sofern das Abstandselement dagegen mehrere länglich verlaufende Erhebungen aufweist, kann dieses vorzugsweise in einem quer und insbesondere senkrecht zu zumindest einer dieser Erhebungen verlaufenden Querschnitt wellen- oder zick-zack-förmig ausgestaltet sein.

Ein vorteilhaft herstellbares Abstandselement eines erfindungsgemäßen Batteriesystems kann dadurch gekennzeichnet sein, dass die Erhebung oder die Erhebungen zumindest teilweise beulenförmig ausgestaltet ist/sind, so dass diese (jeweils) rückseitig eine Einbuchtung ausbildet/ausbilden. Zur Ausbildung von beulenförmigen Erhebungen können diese insbesondere durch Prägen, ggf. thermisches Prägen, ausgebildet werden.

Gemäß einer bevorzugten Ausgestaltungsform eines erfindungsgemäßen Batteriesystems kann vorgesehen sein, dass das Abstandselement einen ersten Anlageabschnitt, der an einer ersten Seite der Batteriezelle anliegt, und einen zweiten Anlageabschnitt, der an einer zweiten Seite der Batteriezelle anliegt, umfasst. Dabei kann vorzugsweise vorgesehen sein, dass der erste Anlageabschnitt die erste Anlagefläche und die zweite Anlagefläche umfasst. Der zweite Anlageabschnitt kann dagegen vorzugsweise mindestens eine dritte Anlagefläche umfassen. Weiterhin bevorzugt kann vorgesehen sein, dass die Anlageabschnitte und/oder die diesen zugeordneten Seiten der mindestens einen Batteriezelle quer und insbesondere senkrecht zueinander ausgerichtet sein. Eine solche Ausgestaltung des Abstandselements ermöglicht insbesondere eine vorteilhafte Positionierung der mindestens einen Batteriezelle relativ zu der Haltestruktur, insbesondere mit jeweils einem definierten Abstand von zwei unterschiedlichen Seiten der mindestens eine Batteriezelle zu angrenzenden Abschnitten der Haltestruktur. Ergänzend oder alternativ kann sich eine solche Ausgestaltung des Abstandselements mit mindestens zwei Anlageabschnitten, die an unterschiedlichen Seiten der mindestens einen Batteriezelle anliegen, vorteilhaft bei einer Montage des Batteriesystems auswirken, indem dadurch auf einfache Weise eine exakte Positionierung des Abstandselements an insbesondere der mindestens eine Batteriezelle gewährleistet werden kann. Hierzu kann nicht nur die erste Anlagefläche, sondern auch die vorzugsweise vorgesehene dritte Anlagefläche zur Anlage an der mindestens einen Batteriezelle gebracht werden.

Sofern ein erfindungsgemäßes Batteriesystem, wie es vorzugsweise vorgesehen ist, eine Mehrzahl von Batteriezellen umfasst, sind diese bevorzugt in einer Reihe, d.h. nebeneinander mit vorzugsweise identischer Ausrichtung, angeordnet, wobei insbesondere vorgesehen sein kann, dass sich das Abstandselement entlang der Reihenanordnung erstreckt. Dadurch kann mittels des Abstandselements auch eine Lagesicherung der einzelnen Batteriezellen in der Reihenanordnung gewährleistet werden, was sich insbesondere vorteilhaft hinsichtlich einer Montage des Batteriesystems auswirken kann. Dies kann insbesondere dann vorteilhaft sein, wenn gemäß einem erfindungsgemäßen Verfahren zur Montage eines erfindungsgemäßen Batteriesystems zunächst das mindestens eine Abstandselement mit der mindestens einen Batteriezelle verklebt wird und anschließend das Abstandselement (und damit indirekt auch die mindestens eine Batteriezelle) mit der Haltestruktur verklebt wird.

Gemäß einer dazu alternativen Ausführungsform eines erfindungsgemäßen Verfahrens zur Montage eines erfindungsgemäßen Batteriesystems kann vorgesehen sein, dass zunächst das mindestens eine Abstandselement mit der Haltestruktur verklebt wird und anschließend das Abstandselement mit der mindestens einen Batteriezelle verklebt wird. Besonders bevorzugt kann dann noch vorgesehen sein, dass das mindestens eine Abstandselement zunächst mit einem Montageelement verbunden und zusammen mit dem Montageelement, insbesondere in einer durch das Montageelement geführten Bewegung in der Haltestruktur positioniert und mit dieser verklebt wird. Das Montageelement kann nach dem Positionieren des mindestens einen Abstandselements in der Haltestruktur aus dieser entfernt und anschließend die mindestens eine zu montierende Batteriezelle in der Haltestruktur positioniert und mit dem mindestens einen Abstandselement verklebt werden. Das Montageelement kann vorzugsweise derart ausgestaltet sein, dass dieses zumindest bezüglich der Flächen, die mit dem mindestens einen Abstandselement in Kontakt kommen, identisch zu der mindestens einen zu montierenden Batteriezelle ausgestaltet ist.

Gemäß einer bevorzugten Ausgestaltungsform eines erfindungsgemäßen Batteriesystems kann vorgesehen sein, dass das Abstandselement elektrisch isolierend ausgestaltet ist. Dadurch kann das Abstandselement eine elektrische Isolierung beziehungsweise Separierung der mindestens einen Batteriezelle von der Haltestruktur gewährleisten, wobei durch den definierten Abstand zwischen der mindestens einen Batteriezelle und der Haltestruktur, der durch das mindestens eine Abstandselement ausgebildet ist, auch eine ausreichende Sicherung gegen einen elektrischen Durchschlag erreicht werden kann.

Zur Realisierung einer elektrisch isolierenden Ausgestaltung des Abstandselements kann vorzugsweise vorgesehen sein, dass dieses vollständig aus mindestens einem elektrisch isolierenden Material, insbesondere einem Kunststoff, beispielsweise einem Polycarbonat und/oder Acrylnitril-Butadien-Styrol-Copolymer (ABS) und/oder Polyamid (PA) und/oder Polyethylenterephthalat (PET), optional faserverstärkt, oder einer Keramik ausgestaltet ist. Dies ermöglicht insbesondere eine kostengünstige Herstellung eines elektrisch isolierenden Abstandselements. Alternativ kann es auch vorteilhaft sein, wenn das Abstandselement ein erstes Element aus mindestens einem elektrisch leitfähigen Material, insbesondere einem Metall, beispielsweise Aluminium und/oder Stahl, und mindestens ein zweites Element aus mindestens einem elektrisch isolierenden Material umfasst. Das zweite Element kann dabei besonders bevorzugt als eine zumindest einseitige, vorzugsweise zweiseitige oder vollumfängliche Beschichtung des ersten Elements ausgebildet sein. Ein solches elektrisch isolierendes Abstandselement kann sich insbesondere durch eine hohe mechanische Belastbarkeit auszeichnen.

Die Erfindung betrifft auch ein Kraftfahrzeug, insbesondere ein elektrisches Kraftfahrzeug mit einem erfindungsgemäßen Batteriesystem. Das Batteriesystem kann insbesondere eine Traktionsbatterie oder zumindest ein Teil einer solchen Traktionsbatterie des elektrischen Kraftfahrzeugs sein. Als "elektrisches Kraftfahrzeug" gilt dabei ein Kraftfahrzeug, das zumindest einen elektrischen Traktionsmotor umfasst, durch den ein alleiniger Antrieb des Kraftfahrzeugs möglich ist. Dabei kann das Kraftfahrzeug ausschließlich den mindestens einen elektrischen Traktionsmotor als Antriebsmotor umfassen ("Elektrofahrzeug") oder der mindestens eine elektrische Traktionsmotor kann zusätzlich zu einer anderen Antriebsvorrichtung, insbesondere einer Brennkraftmaschine, vorgesehen sein ("Hybridfahrzeug"). Das Kraftfahrzeug kann insbesondere ein radbasiertes und nicht schienengebundenes Kraftfahrzeug (vorzugsweise ein PKW oder ein LKW) sein.

Die Erfindung wird nachfolgend anhand von in den Zeichnungen dargestellten Ausführungsbeispielen näher erläutert. In den Zeichnungen zeigt, teilweise in vereinfachter Darstellung:
- Fig. 1:: eine Bodengruppe eines erfindungsgemäßen Kraftfahrzeugs;
- Fig. 2:: ein erfindungsgemäßes Batteriesystem;
- Fig. 3:: eine Batteriezelle des Batteriesystems;
- Fig. 4:: einen Längsschnitt durch die Batteriezelle;
- Fig. 5:: einen Batteriezellenstack und Abstandselemente eines erfindungsgemäßen Batteriesystems;
- Fig. 6:: ein erfindungsgemäßes Batteriesystem mit Abstandselementen gemäß einer ersten Ausgestaltungsform;
- Fig. 7:: ein erfindungsgemäßes Batteriesystem mit Abstandselementen gemäß einer zweiten Ausgestaltungsform;
- Fig. 8:: ein erfindungsgemäßes Batteriesystem mit Abstandselementen gemäß einer dritten Ausgestaltungsform;
- Fig. 9:: ein erfindungsgemäßes Batteriesystem mit Abstandselementen gemäß einer vierten Ausgestaltungsform;
- Fig. 10:: ein erfindungsgemäßes Batteriesystem mit Abstandselementen gemäß einer fünften Ausgestaltungsform;
- Fig. 11:: ein erfindungsgemäßes Batteriesystem mit Abstandselementen gemäß einer sechsten Ausgestaltungsform;
- Fig. 12:: ein erfindungsgemäßes Batteriesystem mit Abstandselementen gemäß einer siebten Ausgestaltungsform;
- Fig. 13:: ein erfindungsgemäßes Batteriesystem mit Abstandselementen gemäß einer achten Ausgestaltungsform;
- Fig. 14:: ein erfindungsgemäßes Batteriesystem mit Abstandselementen gemäß einer neunten Ausgestaltungsform;
- Fig. 15:: ein Abstandselementen gemäß der neunten Ausgestaltungsform in einer Aufsicht;
- Fig. 16:: einen Abschnitt eines Abstandselements gemäß der neunten Ausgestaltungsform in einer perspektivischen Ansicht;
- Fig. 17:: einen Abschnitt einer Stirnseite eines Abstandselements gemäß der neunten Ausgestaltungsform;
- Fig. 18:: einen Abschnitt einer Längsseite eines Abstandselements gemäß der neunten Ausgestaltungsform;
- Fig. 19:: ein erfindungsgemäßes Batteriesystem mit Abstandselementen gemäß einer zehnten Ausgestaltungsform;
- Fig. 20:: ein erfindungsgemäßes Batteriesystem mit Abstandselementen gemäß einer elften Ausgestaltungsform;
- Fig. 21:: eine Ausgestaltung eines Abstandselements für ein erfindungsgemäßes Batteriesystem;
- Fig. 22:: Verfahrensschritte im Rahmen einer Montage eines erfindungsgemäßen Batteriesystems gemäß einer ersten Ausführungsform;
- Fig. 23:: Verfahrensschritte im Rahmen einer Montage eines erfindungsgemäßen Batteriesystems gemäß einer zweiten Ausführungsform;
- Fig. 24:: Verfahrensschritte im Rahmen einer Montage eines erfindungsgemäßen Batteriesystems gemäß einer dritten Ausführungsform.

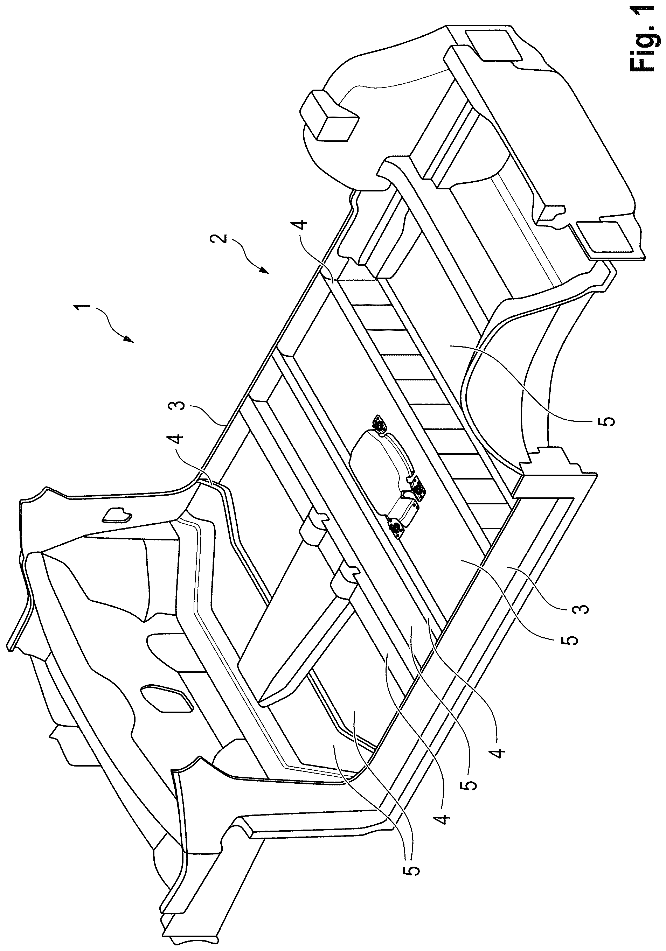

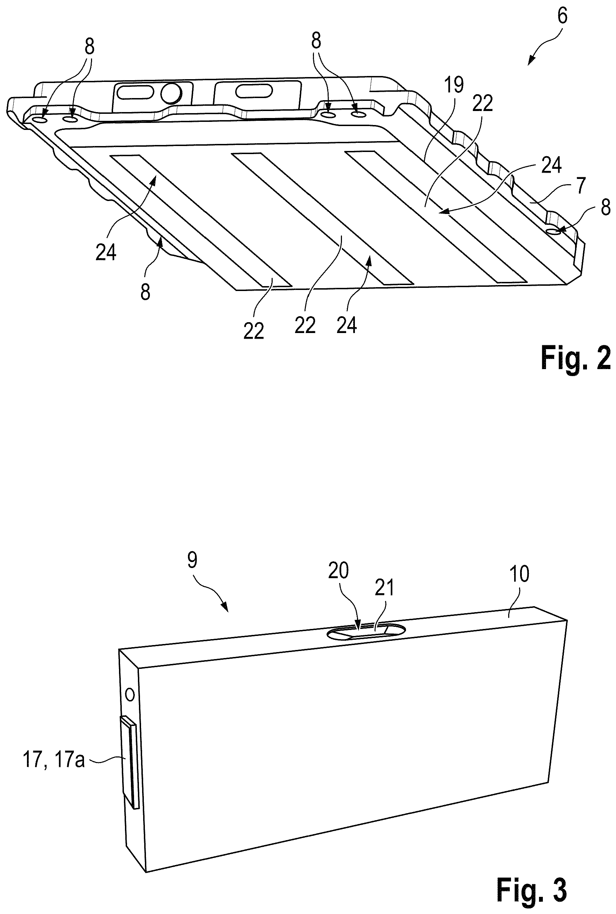

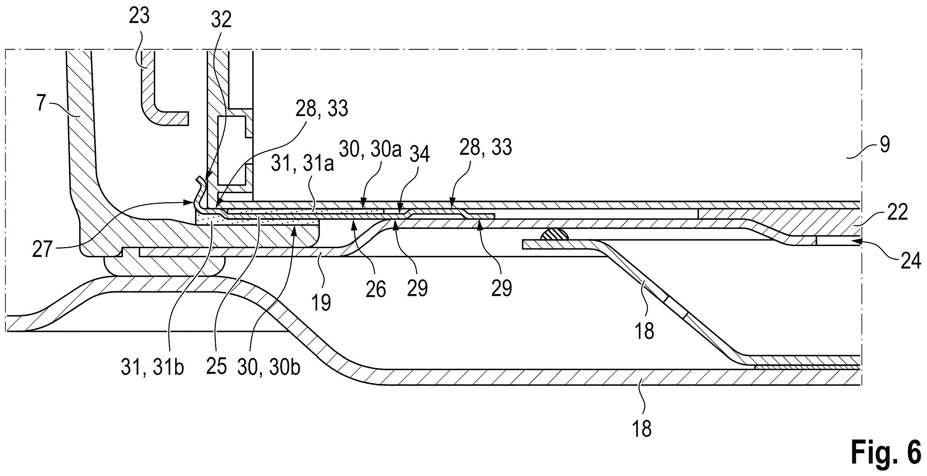

Die Fig. 1 zeigt eine Bodengruppe 1, die ein Teil einer Karosserie für ein elektrisches Kraftfahrzeug ist. Die Bodengruppe 1 stellt unter anderem Befestigungspunkte für Komponenten eines Fahrwerks und eines Antriebsstrangs des Kraftfahrzeugs bereit und diese kann zumindest teilweise aus umgeformten Metallblechen gefertigt sein. Der Abschnitt der Bodengruppe, der zwischen zwei Achsen des Kraftfahrzeugs angeordnet ist, wird nachfolgend als Zwischenboden 2 bezeichnet. Dieser Zwischenboden 2 ist unter anderem von Längsträgern 3, Querträgern 4 und Bodenplatten 5 ausgebildet, wobei diese Komponenten einen Aufnahmeraum (nicht sichtbar) begrenzen, der für die Aufnahme eines (Traktions₋ )Batteriesystems 6 (vgl. Fig. 2) des Kraftfahrzeugs vorgesehen ist. Dieser Aufnahmeraum und damit das Batteriesystem 6 liegen unterhalb der Bodenplatten 5 des Zwischenbodens 2, wobei unterhalb des Batteriesystems 6 zudem noch eine als Unterfahrschutz 18 dienende, flächige Karosseriestruktur angeordnet ist (vgl. Fig. 6 bis 10).

Das Batteriesystem 6 ist in der Fig. 2 dargestellt. Dieses weist ein Batteriesystemgehäuse auf, das einen Halterahmen 7 umfasst, der Verbindungsöffnungen 8 ausbildet, über die der Halterahmen 7 und damit das Batteriesystem 6 mit Längsträgern 3 und Querträgern 4 des Zwischenbodens 2 verbunden sind beziehungsweise werden können. Das Batteriesystemgehäuse umfasst weiterhin noch einen Gehäuseboden 19 sowie einen Gehäusedeckel (nicht sichtbar). Innerhalb des Batteriesystemgehäuses sind eine Vielzahl von Batteriezellen 9 angeordnet, die elektrisch miteinander verschaltet sind, um im Verbund (als Traktionsbatterie) einem elektrischen Traktionsmotor (nicht dargestellt) des Kraftfahrzeugs eine ausreichend große elektrische Leistung für einen Antrieb des Kraftfahrzeugs zur Verfügung stellen zu können.

Die Batteriezellen 9 (vgl. Fig. 3 bis 5) sind als sogenannte prismatische Batteriezellen 9 ausgestaltet und weisen demnach ein quaderförmiges Batteriezellengehäuse 10, das beispielsweise aus einem Metall (z.B. Aluminium) ausgebildet sein kann, auf. Aufgrund der Quaderform weist dieses eine Länge, eine Breite und eine Höhe auf, wobei erfindungsgemäß die Länge die größte, die Breite die mittlere und die Höhe die kleinste der (Kanten-)Abmessungen ist (sofern entsprechende Unterschiede vorliegen). Das Gehäuse umfasst dann zwei Großseiten, die durch die Länge und die Breite aufgespannt werden, zwei Längsseiten, die durch die Länge und die Höhe aufgespannt werden, sowie zwei Stirnseiten, die durch die Breite und die Höhe aufgespannt werden.

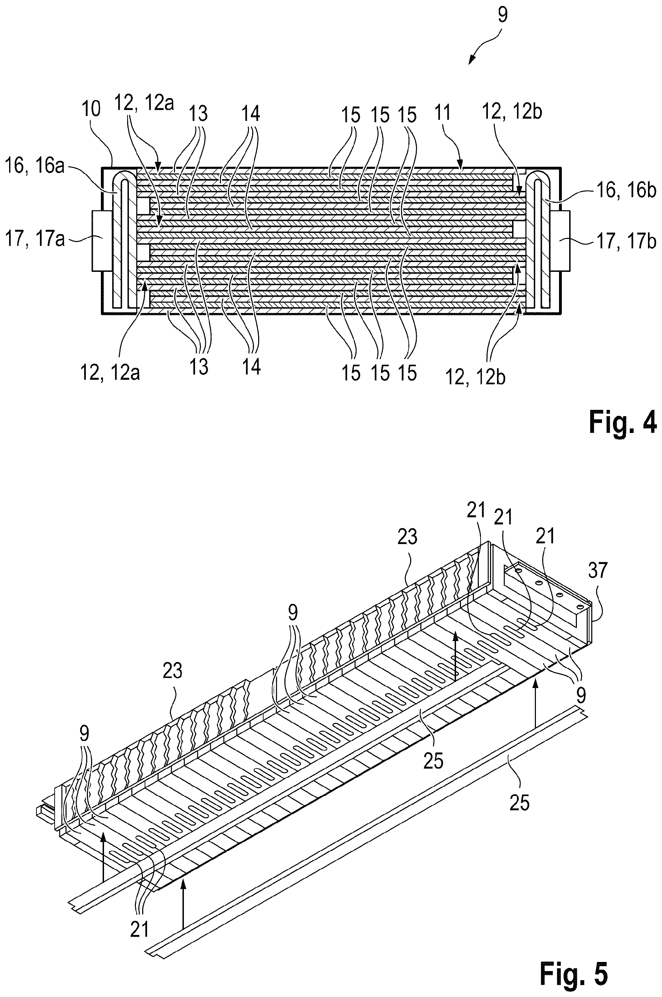

In dem Batteriezellengehäuse 10 sind Batterieelemente aufgenommen (vgl. Fig. 4). Konkret liegen die Batterieelemente dabei gestapelt in Form eines Elektroden-Separatoren-Verbunds (ESV) 11 vor. Alternativ kann aber auch eine gewickelte Anordnung der Batterieelemente vorgesehen sein. Der ESV 11 umfasst in abwechselnder Anordnung eine Mehrzahl von ersten Elektroden 12a, die bei einer Entladung der Batteriezelle 9 als Anoden fungieren, und eine Mehrzahl von zweiten Elektroden 12b, die bei einer Entladung der Batteriezelle 9 als Kathoden fungieren. Infolge der abwechselnden Anordnung der Elektroden 12 ist, mit Ausnahme der beiden in dem Stapel beziehungsweise dem ESV 11 außen gelegenen Elektroden 12, jeweils eine erste Elektrode 12a zwischen zwei zweiten Elektroden 12b und eine zweite Elektrode 12b zwischen zwei ersten Elektroden 12a angeordnet. Dabei sind benachbarte Elektroden 12 jeweils durch einen Separator 13 räumlich getrennt und dadurch auch voneinander elektrisch isoliert. Jeweils eine erste Elektrode 12a und eine zweite Elektrode 12b sowie ein zwischen diesen angeordneter Separator 13, der mit einem Elektrolyten getränkt ist, bilden ein Batterieelement aus. Durch den Elektrolyten ist eine Leitung von Ionen zwischen benachbarten Elektroden 12 über den jeweils dazwischen liegenden Separator 13 möglich.

Jede der Elektroden 12 umfasst ein flächiges, folienförmiges Substrat 14, das beispielsweise bei den als Anoden vorgesehenen ersten Elektroden 12a aus Kupfer und bei den als Kathoden vorgesehenen zweiten Elektroden 12b aus Aluminium ausgestaltet sein kann. In einem rechteckigen Abschnitt davon sind die beiden in Stapelrichtung des ESV 11 gelegenen Großflächen jeder der Elektroden 12 mit einer Beschichtung aus einem Aktivmaterial 15 versehen, um eine Wirkung der verschiedenen Elektroden 12a, 12b als Anoden oder Kathoden während einer Nutzung der Batteriezelle 9 zu ermöglichen. Zumindest im Bereich dieser rechteckigen Abschnitte der Substrate 14 und damit der Elektroden 12 sind diese und die entsprechend rechteckig geformten Separatoren 13 gestapelt, woraus sich die Quaderform des ESV 11 ergibt.

An einer Querseite des rechteckigen Abschnitts jeder Elektrode 12 ist ein Bereich des Substrats 14 vorgesehen, in dem dieses nicht mit der Beschichtung aus dem jeweiligen Aktivmaterial 15 versehen ist. Dieser Bereich der Elektroden 12 dient jeweils als Stromableiter 16, über den die einzelnen Elektroden 12 mit einem jeweils zugeordneten Batteriepol 17 der Batteriezelle 9 direkt oder indirekt elektrisch leitend verbunden sind. Die Stromableiter 16a von allen ersten Elektroden 12a sind dabei mit einem ersten (17a) der Batteriepole 17 und die Stromableiter 16b von allen zweiten Elektroden 12b sind mit einem zweiten (17b) der Batteriepole 17 verbunden.

Die Batteriezellengehäuse 10 der Batteriezellen 9 weisen jeweils in einem zentralen Abschnitt einer ihrer Längsseiten eine Entgasungsöffnung 20 aus, die mittels eines als Überdruckventil dienenden, folienförmigen Berstelements 21 überdeckt und dadurch verschlossen ist. Das Berstelement 21 ist jeweils dazu vorgesehen und entsprechend ausgelegt, dass dieses im Falle eines thermischen Durchgehens der Batterieelemente ein unkontrolliertes Bersten des Batteriezellengehäuses 10 vermeidet, indem ein Gas, das sich infolge des thermischen Durchgehens innerhalb des Batteriezellengehäuses 10 ausbildet und das zu einer relativ großen Druckerhöhung führt, über das dann gezielt zerreißende Berstelement 21 in die Umgebung abgeführt wird.

Die Batteriezellen 9 des Batteriesystems 6 sind in insgesamt drei Batteriezellengruppen unterteilt, die jeweils in einer Reihenanordnung vorliegen (Batteriezellenstacks). Eine der Batteriezellengruppen ist in der Fig. 5 isoliert dargestellt.

Den einzelnen Batteriezellengruppen ist jeweils ein flächiges, plattenförmiges Abdeckelement 22 zugeordnet, das aus einem Schaumstoff besteht. Das Abdeckelement 22 erstreckt sich entlang der gesamten Reihenanordnung der Batteriezellen 9 der jeweiligen Batteriezellengruppe, wobei dieses die Entgasungsöffnungen 20 aller zugeordneten Batteriezellen 9 überdeckt. Die Entgasungsöffnungen 20 der Batteriezellen 9 der einzelnen Batteriezellengruppen und damit auch ein zentraler Abschnitt des jeweils zugehörigen Abdeckelements 22 sind im montierten Zustand des Batteriesystems im Bereich jeweils einer länglichen Durchgangsöffnung 24 des Gehäusebodens 19 des Batteriesystemgehäuses angeordnet. Dadurch wird ermöglicht, dass bei einem thermischen Durchgehen einer der Batteriezellen 9 und einer dadurch bewirkten Zerstörung des zugehörigen Berstelements 21 sowie des angrenzenden Abschnitts des Abdeckelements 22 das aus dieser Batteriezelle 9 austretende Gas über die zugeordnete Durchgangsöffnung 24 des Gehäusebodens 19 aus dem Batteriesystemgehäuse abgeführt wird. Dadurch wird die Gefahr minimiert, dass dieses austretende Gas, das eine sehr hohe Temperatur aufweisen und zudem auch Partikel mitführen kann, die angrenzenden Batteriezellen 9 beschädigen und somit zu einer thermischen Propagation führen kann.

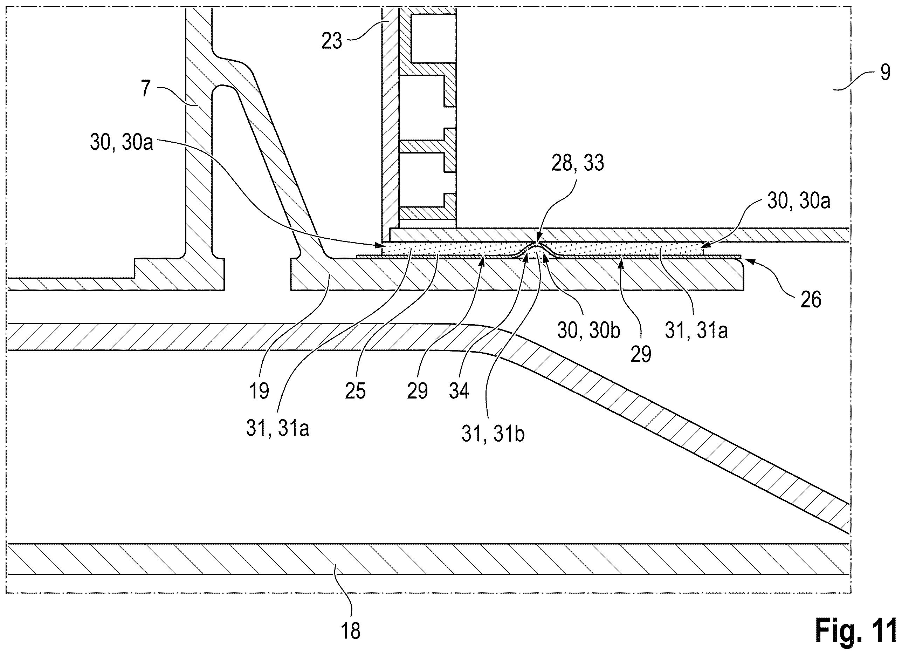

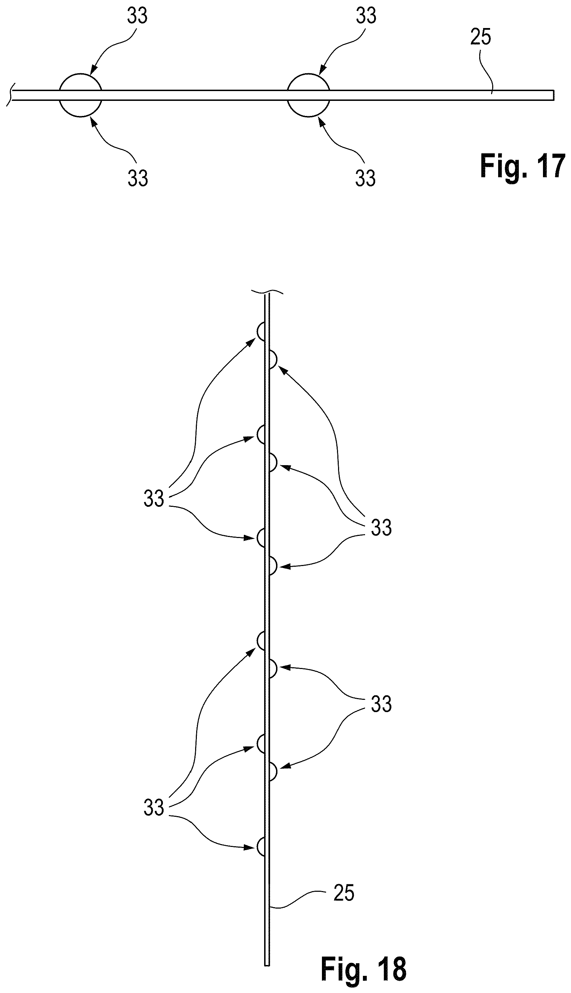

Den einzelnen Batteriezellengruppen sind weiterhin jeweils zwei Abstandselemente 25 zugeordnet, die als längliche Profileelemente, teilweise mit einem L-förmigen Profilquerschnitt (vgl. Fig. 6 bis 10, 20 und 21) und teilweise mit einem I-förmigen Profilquerschnitt (vgl. Fig. 11 bis 19) ausgestaltet sind. Die Abstandselemente 25 erstrecken sich jeweils über die gesamte Längserstreckung der Batteriezellengruppen. Bei den Abstandselementen 25 mit L-förmigen Profilquerschnitten liegt jeweils ein erster Anlageabschnitt 26 (im Bereich des längeren Schenkels des L-förmigen Profilquerschnitts) an Unterseiten der Batteriezellen 9 an, wobei diese Unterseiten jeweils von einer Längsseite der quaderförmigen Batteriezellen 9 ausgebildet sind, während ein zweiter Anlageabschnitt 27 (im Bereich des kürzeren Schenkels des L-förmigen Profilquerschnitts) an Stirnseiten der Batteriezellen 9 anliegt. Die Abstandselemente 25 mit I-förmigen Profilquerschnitten umfassend jeweils lediglich einen entsprechenden ersten Anlageabschnitt 26.

Unter Zwischenanordnung der Abstandselemente 25 liegen die Batteriezellen 9 auf dem Gehäuseboden 19 des Batteriesystemgehäuses auf, wobei die Abstandselemente 25 im Bereich ihres ersten Anlageabschnitts 26 einen oder mehrere erste Anlageflächen 28 zur Anlage an den zugeordneten Batteriezellen 9 und eine oder mehrere zweite Anlageflächen 29 zur Anlage an dem Gehäuseboden 19 ausbilden. Die Abstandselemente 25 halten dadurch die Batteriezellen 9 der zugeordneten Batteriezellengruppe in einem definierten Abstand zu dem Gehäuseboden 19. Dadurch werden jeweils zwei Klebstoffaufnahmeräume 30 ausgebildet, die mit unterschiedlichen Teilmengen eines Klebstoff 31 oder mit chemisch unterschiedlichen Klebstoffen 31a, 31b gefüllt sind, um ein indirektes Verkleben der Batteriezellen 9 mit dem Gehäuseboden 19 und damit mit dem Batteriesystemgehäuse zu realisieren. Von den zwei Klebstoffaufnahmeräumen 30, die durch das Abstandselement 25 selbst voneinander separiert sind und somit nicht ineinander übergehen, ist ein erster Klebstoffaufnahmeraum 30a zwischen dem jeweiligen Abstandselement 25 und den zugeordneten Batteriezellen 9 ausgebildet, während ein zweiter Klebstoffaufnahmeraum 30b zwischen dem Abstandselement und dem Gehäuseboden 19 des Batteriesystemgehäuses ausgebildet ist. Die einzelnen Klebstoffaufnahmeräume 30 können dabei einteilig oder mehrteilig (d.h. in mehrere voneinander separierte Teilaufnahmeräume unterteilt) ausgebildet sein.

Im Bereich der zweiten Anlageabschnitte 27 bilden die Abstandselemente 25 mit L-förmigen Profilquerschnitten jeweils eine dritte Anlagefläche 32 zur Anlage an den Stirnseiten der Batteriezellen 9 aus. Die zweiten Anlageabschnitte 27 mit der jeweiligen dritten Anlagefläche 32 dienen jeweils ausschließlich oder primär einer möglichst exakten Positionierung der Abstandselemente 25 in der Breitenrichtung der Batteriezellengruppen (und damit in der Längsrichtung der einzelnen Batteriezellen 9), indem die Abstandselemente 25 jeweils so positioniert werden, dass die jeweilige dritte Anlagefläche 32 an den zugeordneten Batteriezellen 9 zur Anlage kommt.

Die Abstandselemente 25 sind jeweils aus einem plattenförmigen Grundkörper ausgebildet, wobei ein unebener Verlauf des Grundkörpers bezüglich des Längsverlaufs der Profilquerschnitte sowohl in dem ersten Anlageabschnitt 26 als auch in dem zweiten Anlageabschnitt 27 (bei den Abstandselementen 25 mit L-förmigen Profilquerschnitten) zu der Ausbildung von Erhebungen 33 führt, die im Bereich ihrer Gipfel jeweils eine der Anlageflächen 28, 29, 30 ausbilden. Die Erhebungen 33grenzen jeweils an mindestens eine Vertiefung 34 an. Diese Vertiefungen 34 dienen zumindest teilweise als Klebstoffaufnahmeräume 30. Der plattenförmige Grundkörper kann beispielsweise eine Dicke beziehungsweise Materialstärke von 0,4 mm aufweisen. Bezogen auf die jeweils angrenzende Oberfläche des Grundkörpers können die Erhebungen 33 beispielsweise eine Höhe von 0,5 mm aufweisen.

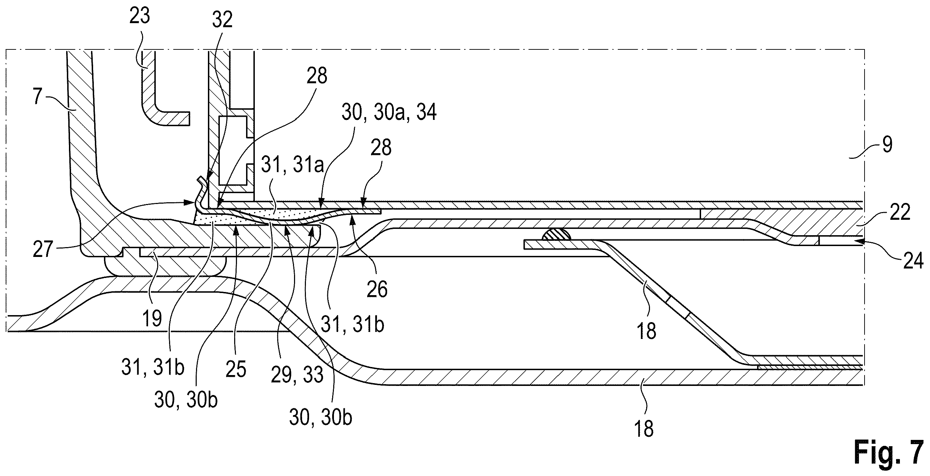

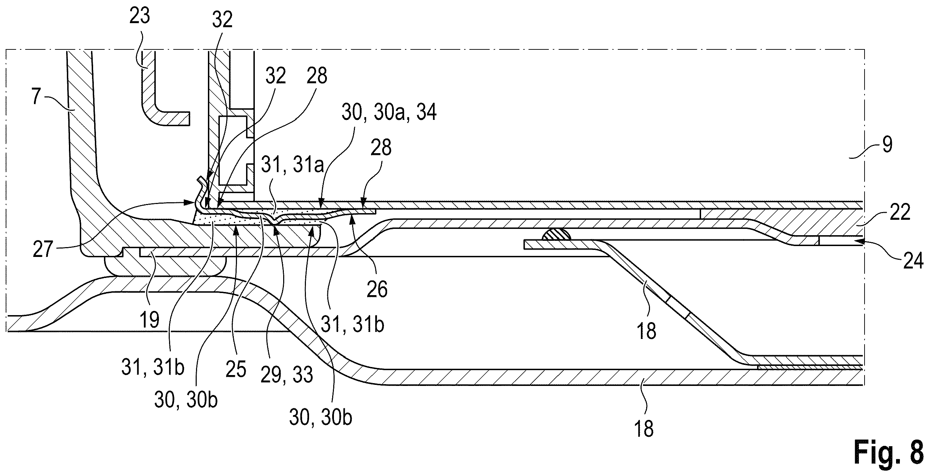

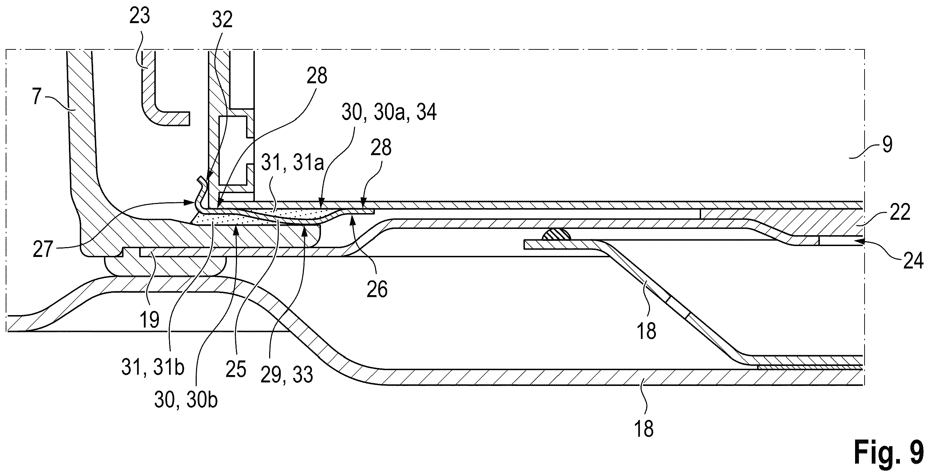

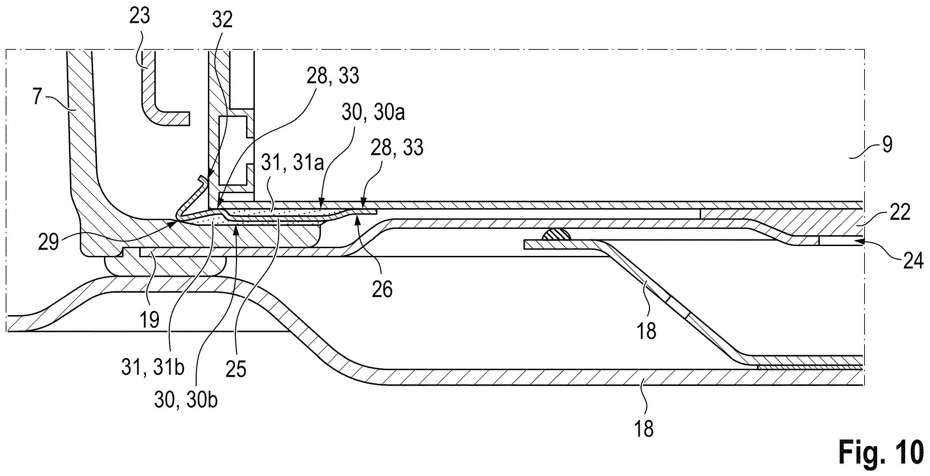

Die Fig. 6 bis 10 zeigen verschiedene Ausgestaltungsformen der Abstandselemente 25 mit L-förmigen Profilquerschnitten, die sich lediglich in der Form des jeweiligen Profilquerschnitts unterscheiden. Dabei sind jeweils zwei erste Anlageflächen 28 vorgesehen, die jeweils einen ersten Klebstoffaufnahmeraum 30a begrenzen, während entweder eine zweite Anlagefläche 29 (vgl. Fig. 7 bis 10) oder zwei zweite Anlageflächen 29 (vgl. Fig. 6) vorgesehen sind. Die zweite(n) Anlagefläche(n) 29 ist/sind dabei beabstandet von dem zweiten Klebstoffaufnahmeraum 30b angeordnet (vgl. Fig. 6) oder diese sind innerhalb des zweiten Klebstoffaufnahmeraums 30b positioniert und unterteilen diesen dadurch in zwei Teilaufnahmeräume (vgl. Fig. 7 und 8) oder die zweite(n) Anlagefläche(n) 29 begrenzt/begrenzen einen zweiten Klebstoffaufnahmeraum 30b zumindest einseitig (vgl. Fig. 9 und 10).

Die Fig. 11 bis 18 und 20 zeigen verschiedene Ausgestaltungsformen der Abstandselemente 25 mit I-förmigen Profilquerschnitten.

Bei dem Abstandselement 25 gemäß der Fig. 11 ist eine Erhebung 33 vorgesehen, die eine erste Anlagefläche 28 ausbildet. Diese Erhebung 33 kann geradlinig in Längsrichtung des Abstandselements 25 verlaufen (Dies kann auch bei den Erhebungen der Abstandselemente 25 gemäß den Fig. 6 bis 10 vorgesehen sein). Beidseitig dieser Erhebung 33 ist ein (zweigeteilter) erster Klebstoffaufnahmeraum 30a ausgebildet. Die Erhebung 33 ist beulenförmig ausgestaltet, so dass diese rückseitig eine Einbuchtung ausbildet, die eine Vertiefung 34 darstellt, die als zweiter Klebstoffaufnahmeraum 30b dient. Beidseitig dieses zweiten Klebstoffaufnahmeraums 30b ist jeweils eine zweite Anlagefläche 29 vorgesehen.

Alternativ zu der in der Fig. 11 dargestellten Ausgestaltungsform kann das Abstandselement 25 auch um 180° bezüglich einer Horizontalachse gedreht eingesetzt werden, so dass die Erhebung 33 eine zweite Anlagefläche 29 mit beidseitig davon angeordnetem zweiten Klebstoffaufnahmeraum 30b ausbildet, während die rückseitige Einbuchtung eine Vertiefung 34 darstellt, die als erster Klebstoffaufnahmeraum 30a dient.

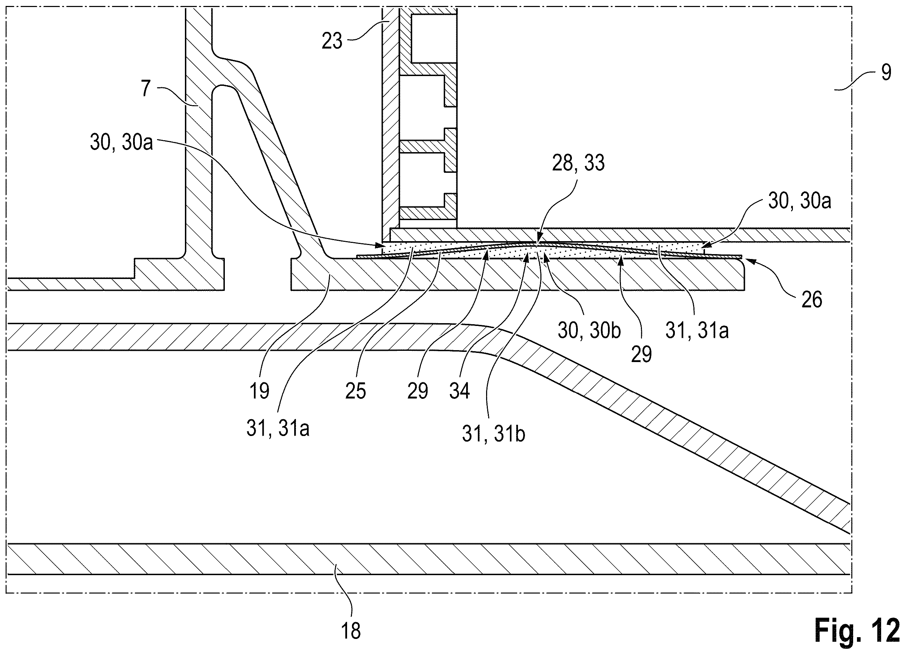

Bei dem Abstandselement 25 gemäß der Fig. 12 sind dessen Querschnitte, die senkrecht zu der einen geradlinig verlaufenden Erhebung 33 ausgerichtet sind, V-förmig ausgestaltet. Wie bei dem Abstandselement 25 gemäß der Fig. 11 ergibt sich eine erste Anlagefläche 28, ein (zweigeteilter) erster Klebstoffaufnahmeraum 30a und eine als Einbuchtung zu der Erhebung 33 ausgebildete Vertiefung 34, die als zweiter Klebstoffaufnahmeraum 30b dient. Die in Längsrichtung verlaufenden Kanten des Abstandselements 25 bilden an ihrer Unterseite jeweils eine zweite Anlagefläche 29 aus.

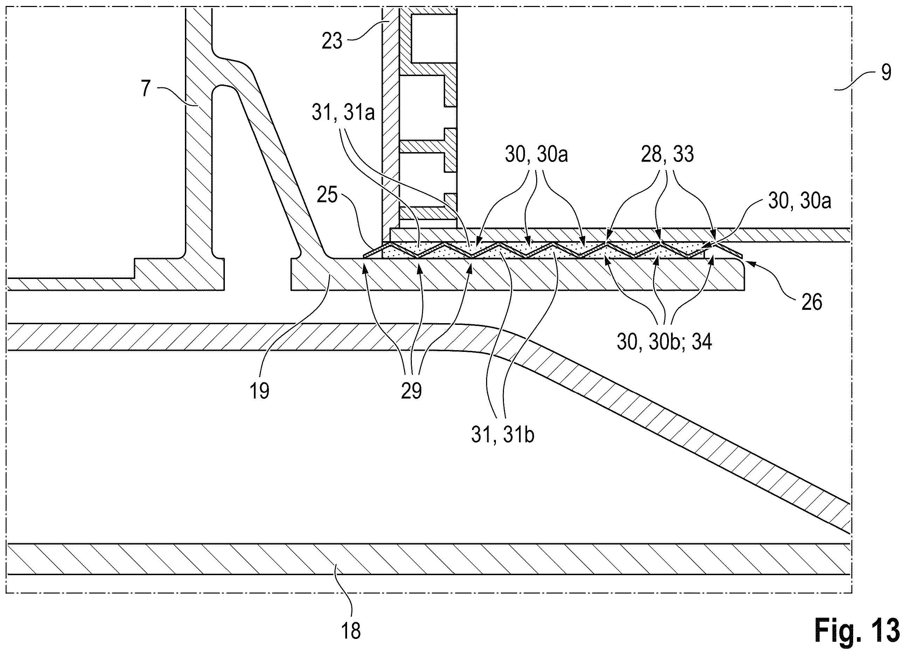

Das Abstandselement 25 gemäß der Fig. 13 stellt im Prinzip eine Aneinanderreihung mehrerer Abstandselemente 25 mit V-förmigen Querschnitten gemäß der Fig. 12 dar, so dass sich zick-zack-förmige Querschnitte ergeben. Daraus folgt eine entsprechende Anzahl an Erhebungen 33, die jeweils eine erste Anlagefläche 28 oder zweite Anlagefläche 29 ausbilden, sowie Vertiefungen 34, die jeweils als ein erster Klebstoffaufnahmeraum 30a oder zweiter Klebstoffaufnahmeraum 30b dienen.

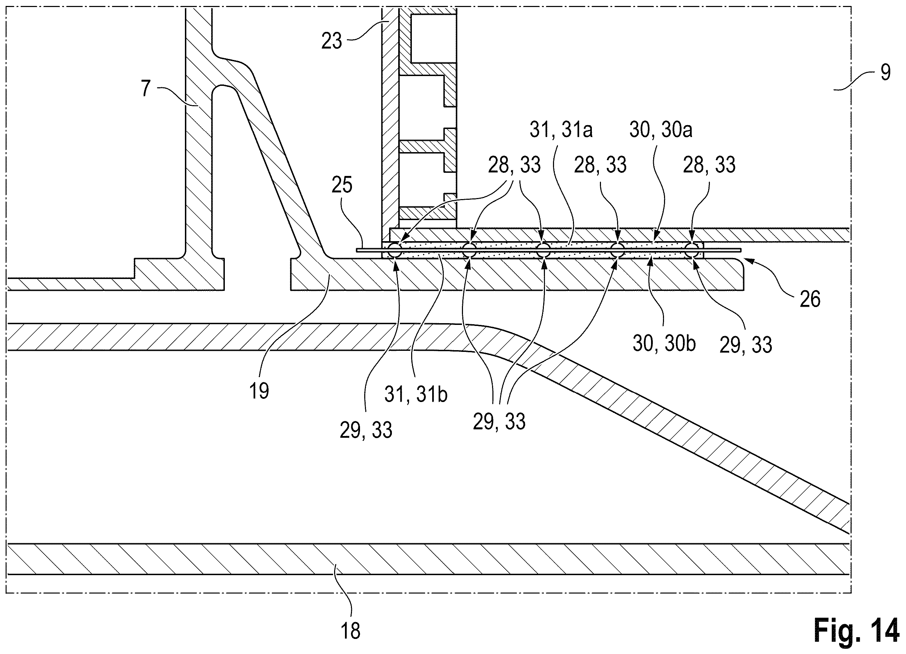

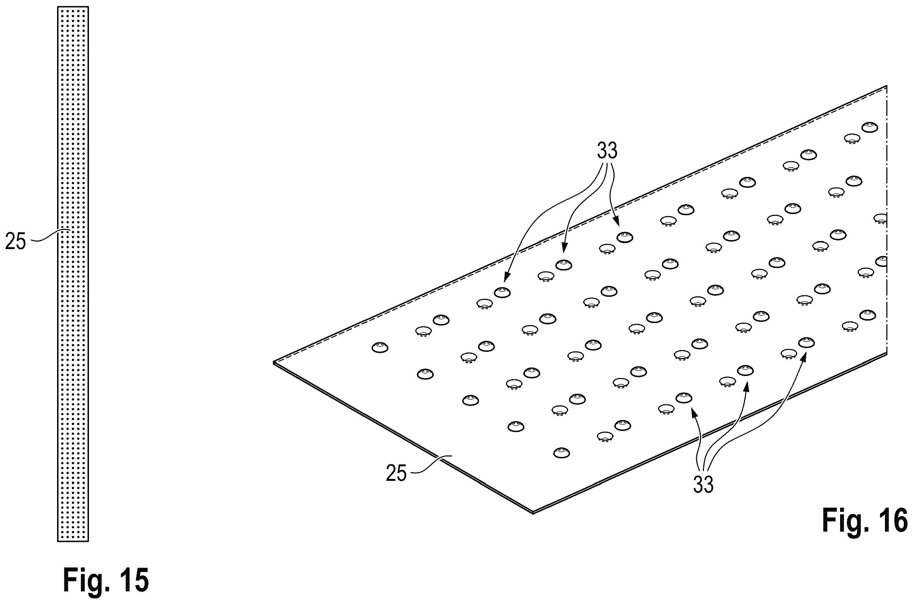

Das Abstandselement 25 gemäß den Fig. 14 bis 18 ist durch eine Vielzahl von relativ kleinen, beabstandet zueinander angeordneten Erhebungen 33 gekennzeichnet, die beidseitig des plattenförmigen Abstandselements 25 vorgesehen sind und die jeweils eine der ersten oder zweiten Anlageflächen 28, 29 ausbilden, wobei die Erhebungen 33 in einem gleichmäßigen, quadratischen Muster angeordnet sind. Dabei sind die Muster der Erhebungen 33 der zwei Seiten des Abstandselements 25 ein Stück weit in dessen Längsrichtung versetzt zueinander angeordnet, wie sich dies aus den Fig. 16 bis 18 ergibt. Die Anlageflächen 28, 29 der Erhebungen 33 sind kreisflächenförmig (mit sehr geringer Größe, d.h. nahezu punktförmig) ausgestaltet. Die beidseitig des plattenförmigen Grundkörpers durch die Erhebungen 33 ausgebildeten Freiräume zu einerseits den Batteriezellen 9 und andererseits dem Gehäuseboden 19 des Batteriesystemgehäuses, die somit auch zwischen den Erhebungen 33 verlaufen, stellen erste oder zweite Klebstoffaufnahmeräume 30a, 30b dar, die mit einem Klebstoff 31, optional unterschiedlichen Klebstoffen 31a, 31b, gefüllt sind. Auch die Erhebungen 33 bei dem Abstandselement 25 gemäß den Fig. 14 bis 18 sind beulenförmig ausgestaltet und bilden somit rückseitig Einbuchtungen aus.

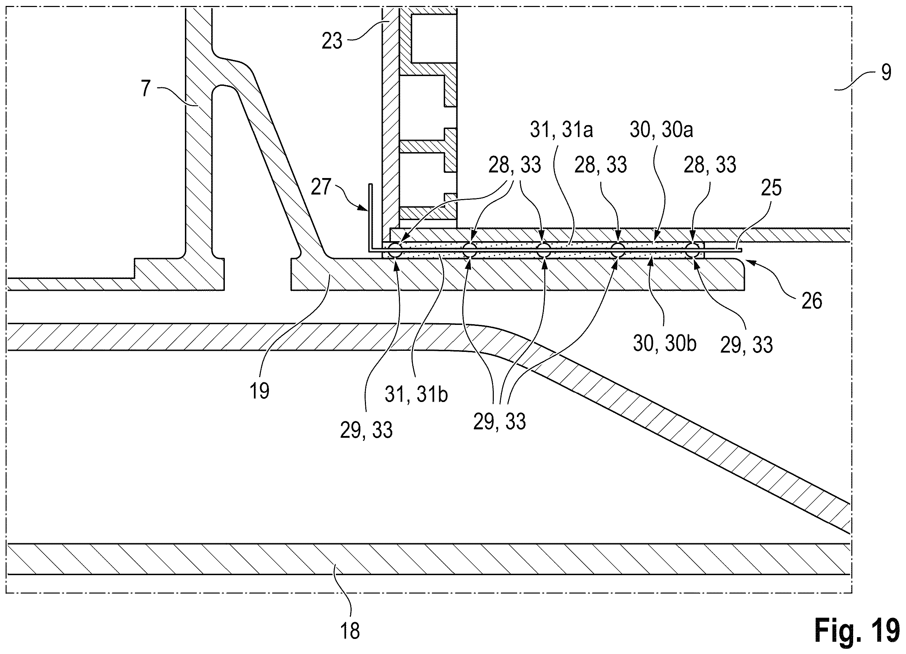

Das Abstandselement 25 gemäß der Fig. 19 entspricht im Wesentlichen demjenigen gemäß den Fig. 14 bis 18, jedoch mit einem L-förmigen Profilquerschnitt und damit ergänzt um einen zweiten Anlageabschnitt 27.

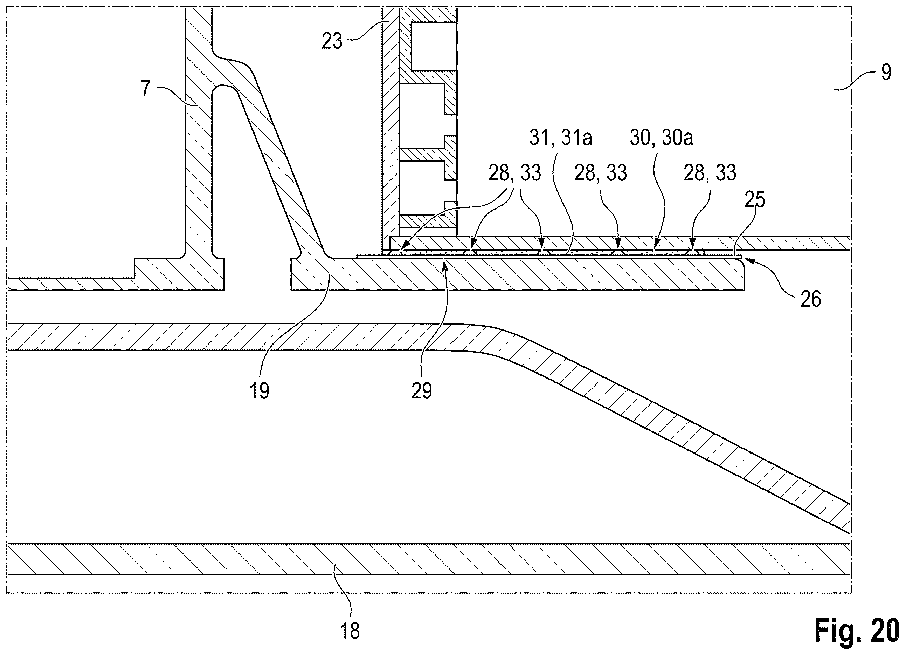

Bei dem Abstandselement 25 gemäß der Fig. 20 sind wiederum eine Vielzahl von Erhebungen 33 vorgesehen, wie dies auch bei den Abstandselementen 25 gemäß den Fig. 14 bis 18 sowie 19 vorgesehen ist, dies jedoch lediglich auf einer Seite des plattenförmigen Grundkörpers des Abstandselements 25. Als zweite Klebstoffaufnahmeräume 30b dienen dann die als Einbuchtungen vorliegenden Vertiefungen 34 (nicht sichtbar), die sich aufgrund der beulenförmigen Ausgestaltung der Erhebungen 33 ergeben. Auch bei dieser Ausgestaltungsform ist eine alternative Verwendung des Abstandselements 25 in einer um 180° bezüglich einer Horizontalachse gedrehten Ausrichtung möglich.

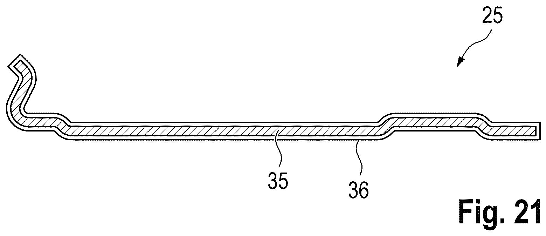

Die Abstandselemente 25 können jeweils elektrisch isolierend ausgestaltet sein, um eine elektrische Separierung der Batteriezellen 9, deren Batteriezellengehäuse 10 ein elektrisches Potenzial aufweisen können, von dem Batteriesystemgehäuses zu gewährleisten. Dabei kann vorgesehen sein, dass die Abstandselemente 25 vollständig aus einem (ausreichend) elektrisch isolierenden Material, beispielsweise einem Polcarbonat, ausgestaltet sind, wie dies in den Fig. 6 bis 20 dargestellt ist. Alternativ kann auch vorgesehen sein, dass die Abstandselemente 25 eine erste Komponente (Kern) 35 aus einem elektrisch leitfähigen Material, beispielsweise einem Metall, und eine zweite Komponente aus einem elektrisch isolierenden Material umfassen, wobei diese zweite Komponente vorzugsweise als Beschichtung, beispielsweise in Form einer Lackierung, der ersten Komponente 35 ausgestaltet ist (vgl. Fig. 21).

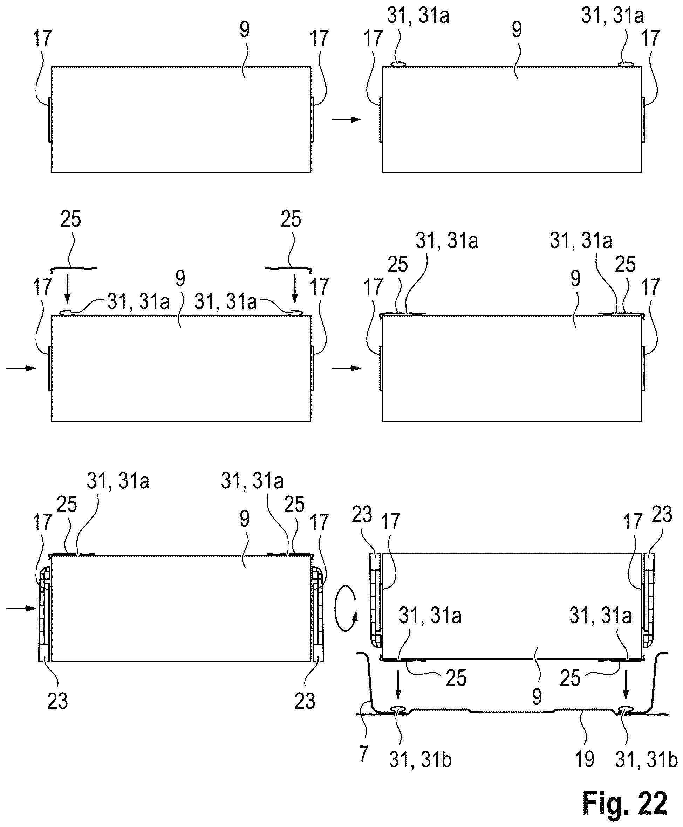

Die Fig. 22, 23 und 24 zeigen jeweils mehrere Verfahrensschritte im Rahmen unterschiedlicher Vorgehensweisen zur Montage eines erfindungsgemäßen Batteriesystems. Bei dem Vorgehen gemäß der Fig. 22 wird zunächst ein erster Klebstoff 31a in den beiden Endabschnitten der im montierten Zustand des Batteriesystems als Unterseiten vorgesehenen, zunächst jedoch oben liegenden Längsseiten der Batteriezellen 9 der einzelnen Batteriezellengruppen angeordnet. Anschließend werden die Abstandselemente 25 an die Batteriezellen 9 angedrückt, bis der erste Klebstoff 31a ausreichend ausgehärtet ist. Daraufhin werden an den beiden Längsseiten der einzelnen Batteriezellengruppen, die von den Stirnseiten der Batteriezellen 9 ausgebildet sind, jeweils ein sich über die gesamte Längserstreckung der Batteriezellengruppen erstreckendes Schutzelement 23 befestigt, das die jeweils zugeordneten Batteriepole 17 der Batteriezellen 9 abdeckt und dadurch einen ungewollten Kontakt der Batteriepole 17 mit einer anderen Komponente und damit einen potentiellen elektrischen Kurzschluss im Rahmen der Montage verhindert. Anschließend werden die Batteriezellengruppen mit den Abstandselementen 25 so gedreht, dass die Abstandselemente 25 unten gelegen sind. Die Batteriezellengruppen werden dann in das Batteriesystemgehäuse eingesetzt, wobei bereits ein zweiter Klebstoff 31b an denjenigen Stellen angeordnet wurde, an denen durch die Abstandselemente 25 jeweils ein zweiter Klebstoffaufnahmeraum 30b ausgebildet wird.

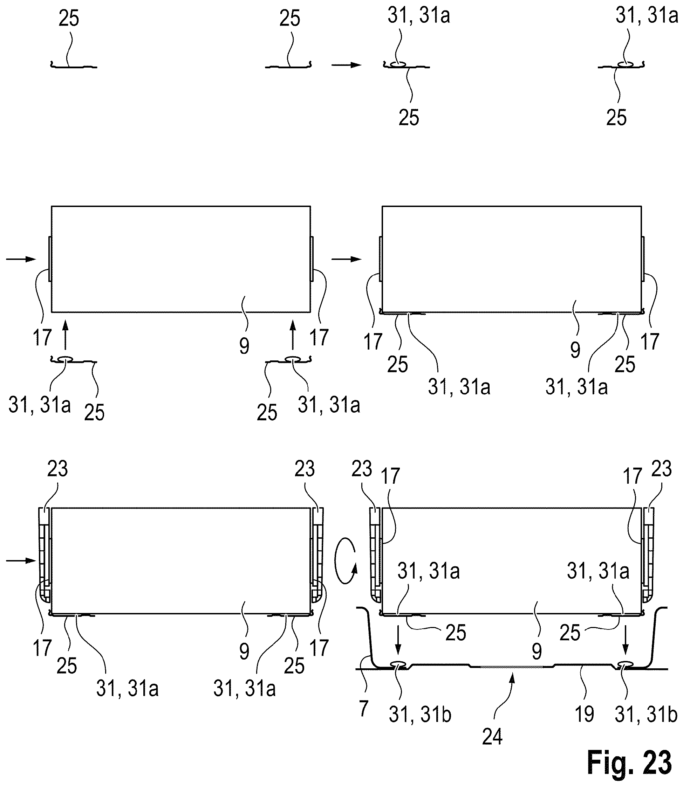

Von diesem Vorgehen unterscheidet sich das in der Fig. 23 dargestellte Verfahren darin, dass der erste Klebstoff 31a zuerst auf die Abstandselemente 25 aufgebracht wird und die Abstandselemente 25 dann mit den Batteriezellengruppen verbunden werden. Die Batteriezellengruppen befinden sich dabei bereits in den für das Einbringen in das Batteriesystemgehäuse vorgesehenen Ausrichtungen, so dass ein Drehen von diesen vermieden werden kann. Dadurch kann die Montage des Batteriesystems vereinfacht sein.

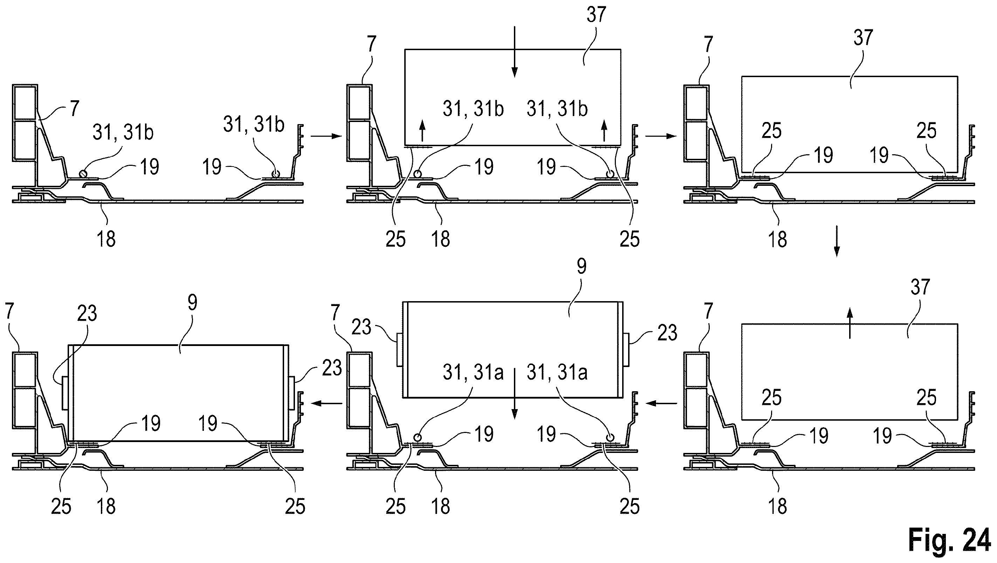

Bei dem Verfahren gemäß der Fig. 24 ist vorgesehen, dass zunächst ein Klebstoff 31, der ein zweiter Klebstoff 31b sein kann, zumindest an denjenigen Stellen des Batteriesystemgehäuses angeordnet wird, an denen im späteren durch die Abstandselemente 25 jeweils ein zweiter Klebstoffaufnahmeraum 30b ausgebildet ist. Daraufhin werden die Abstandselemente 25 mittels eines Montageelements 37, dessen Abmessungen im Wesentlichen denjenigen einer aus mehreren Batteriezellen 9 bestehenden Batteriezellengruppe entsprechen können, in dem Batteriesystemgehäuse positioniert, bis ein zumindest teilweises Aushärten des (zweiten) Klebstoffs 31(b) erfolgt ist. Für dieses Positionieren der Abstandselemente 25 in dem Batteriesystemgehäuse sind diese temporär an dem Montageelement 37 befestigt, beispielsweise mittels Unterdrucks. Anschließend wird das Montageelement 37 entfernt, ein (erster) Klebstoff 31(a) zumindest an solchen Stellen auf den Abstandselementen 25 positioniert, an denen durch diese im späteren jeweils ein erster Klebstoffaufnahmeraum 30a ausgebildet ist, und anschließend eine Batteriezellengruppe mit Batteriezellen 9 in dem Batteriesystemgehäuse angeordnet. Nach einem vollständigen Aushärten des Klebstoffs 31 oder der Klebstoffe 31a, 31b ist dann eine abschließende stoffschlüssige Verbindung der Batteriezellen 9 mit dem Batteriesystemgehäuse ausgebildet.

### Bezugszeichenliste

- 1: Bodengruppe
- 2: Zwischenboden
- 3: Längsträger
- 4: Querträger
- 5: Bodenplatte
- 6: Batteriesystem
- 7: Gehäuserahmen
- 8: Verbindungsöffnung
- 9: Batteriezelle
- 10: Batteriezellengehäuse
- 11: Elektroden-Separatoren-Verbund (ESV)
- 12: Elektrode
- 12a: erste Elektrode
- 12b: zweite Elektrode
- 13: Separator
- 14: Substrat
- 15: Aktivmaterial
- 16: Stromableiter
- 16a: erster Stromableiter
- 16b: zweiter Stromableiter
- 17: Batteriepol
- 17a: erster Batteriepol
- 17b: zweiter Batteriepol
- 18: Unterfahrschutz
- 19: Gehäuseboden
- 20: Entgasungsöffnung
- 21: Berstelement
- 22: Abdeckelement
- 23: Schutzelement
- 24: Durchgangsöffnung
- 25: Abstandselement
- 26: erster Anlageabschnitt
- 27: zweiter Anlageabschnitt
- 28: erste Anlagefläche
- 29: zweite Anlagefläche
- 30: Klebstoffaufnahmeraum
- 30a: erster Klebstoffaufnahmeraum
- 30b: zweiter Klebstoffaufnahmeraum
- 31: Klebstoff
- 31a: erster Klebstoff
- 31b: zweiter Klebstoff
- 32: dritte Anlagefläche
- 33: Erhebung
- 34: Vertiefung
- 35: erste Komponente des Abstandselements
- 36: zweite Komponente des Abstandselements
- 37: Montageelement

## Patentansprüche

1. Batteriesystem mit mindestens einer Batteriezelle (9), die in einer Haltestruktur durch mindestens eine Klebeverbindung befestigt aufgenommen ist, **gekennzeichnet durch** mindestens ein Abstandselement (25), das eine erste Anlagefläche (28) zur Anlage an der Batteriezelle (9) und eine zweite Anlagefläche (29) zur Anlage an der Haltestruktur ausbildet, wobei durch das Abstandselement (25) mindestens ein Klebstoffaufnahmeraum (30) ausgebildet ist, der mit einem Klebstoff (31) gefüllt ist.

2. Batteriesystem gemäß Anspruch 1, **dadurch gekennzeichnet, dass** das Abstandselement (25) mit der Batteriezelle (9) einen ersten Klebstoffaufnahmeraum (30a) ausbildet, der mit einem ersten Klebstoff (31a) gefüllt ist, und mit der Haltestruktur einen zweiten Klebstoffaufnahmeraum (30b) ausbildet, der mit einem zweiten Klebstoff (31b) gefüllt ist.

3. Batteriesystem gemäß Anspruch 2, **dadurch gekennzeichnet, dass** der erste Klebstoffaufnahmeraum (30a) von dem zweiten Klebstoffaufnahmeraum (30b) separiert ist.

4. Batteriesystem gemäß Anspruch 2 oder 3, **dadurch gekennzeichnet, dass** sich der erste Klebstoff (31a) von dem zweiten Klebstoff (31b) chemisch unterscheidet.

5. Batteriesystem gemäß einem der vorhergehenden Ansprüche, **dadurch gekennzeichnet, dass** das Abstandselement (25) in zumindest einem Abschnitt plattenförmig ausgebildet ist, wobei mindestens eine Erhebung (33) des plattenförmigen Abschnitts eine der Anlageflächen (28, 29) ausbildet und mindestens eine Durchgangsöffnung und/oder mindestens eine Vertiefung (34) des plattenförmigen Abschnitts den Klebstoffaufnahmeraum (30) oder die Klebstoffaufnahmeräume (30) ausbildet.

6. Batteriesystem gemäß Anspruch 5, **dadurch gekennzeichnet, dass** das Abstandselement (25) an zumindest einer Seite eine Vielzahl von beabstandet zueinander angeordneten Erhebungen (33) aufweist, die jeweils eine der Anlageflächen (28, 29) ausbilden.

7. Batteriesystem gemäß Anspruch 6, **dadurch gekennzeichnet, dass** das Abstandselement (25) an zwei gegenüberliegenden Seiten jeweils eine Vielzahl von beabstandet zueinander angeordneten Erhebungen (33) aufweist, die jeweils eine der Anlageflächen (28, 29) ausbilden.

8. Batteriesystem gemäß Anspruch 6 oder 7, **dadurch gekennzeichnet, dass** die Erhebungen kreisflächenförmige Anlageflächen (28, 29) ausbilden.

9. Batteriesystem gemäß Anspruch 5, **dadurch gekennzeichnet, dass** das Abstandselement (25) eine einzelne länglich verlaufende Erhebung (33) oder mehrere länglich verlaufende Erhebungen (33) aufweist.

10. Batteriesystem gemäß Anspruch 9, **dadurch gekennzeichnet, dass** das Abstandselement (25) in einem Schnitt quer zu der einzelnen länglich verlaufenden Erhebung (33) V-förmig ausgestaltet ist.

11. Batteriesystem gemäß Anspruch 9, **dadurch gekennzeichnet, dass** das Abstandselement in einem Schnitt quer zu den mehreren länglich verlaufenden Erhebungen (33) wellen- oder zick-zack-förmig ausgestaltet ist.

12. Batteriesystem gemäß einem der Ansprüche 5 bis 11, **dadurch gekennzeichnet, dass** die mindestens eine Erhebung (33) zumindest teilweise beulenförmig ausgestaltet ist, so dass diese rückseitig eine Einbuchtung ausbildet.

13. Batteriesystem gemäß einem der vorhergehenden Ansprüche, **dadurch gekennzeichnet, dass** das Abstandselement (25) einen ersten Anlageabschnitt (26), der an einer ersten Seite der Batteriezelle (9) anliegt, und einen zweiten Anlageabschnitt (27), der an einer zweiten Seite der Batteriezelle (9) anliegt, umfasst.

14. Batteriesystem gemäß einem der vorhergehenden Ansprüche, **gekennzeichnet durch** eine Mehrzahl von Batteriezellen (9) in einer Reihenanordnung, wobei sich das Abstandselement (25) entlang der Reihenanordnung erstreckt.

15. Batteriesystem gemäß einem der vorhergehenden Ansprüche, **dadurch gekennzeichnet, dass** das Abstandselement (25) elektrisch isolierend ausgestaltet ist.

16. Batteriesystem gemäß Anspruch 15, **dadurch gekennzeichnet, dass** das Abstandselement (25) vollständig aus mindestens einem elektrisch isolierenden Material ausgestaltet ist.

17. Batteriesystem gemäß Anspruch 15, **dadurch gekennzeichnet, dass** das Abstandselement (25) eine erste Komponente (35) aus mindestens einem elektrisch leitfähigen Material und eine zweite Komponente (36) aus mindestens einem elektrisch isolierenden Material umfasst.

18. Verfahren zur Montage eines Batteriesystems gemäß einem der vorhergehenden Ansprüche, **dadurch gekennzeichnet, dass** zunächst das mindestens eine Abstandselement (25) mit der Batteriezelle (9) verklebt wird und anschließend das Abstandselement (25) mit der Haltestruktur verklebt wird oder dass zunächst das mindestens eine Abstandselement (25) mit der Haltestruktur verklebt wird und anschließend das Abstandselement (25) mit der Batteriezelle (9) verklebt wird.

19. Verfahren gemäß Anspruch 18, **dadurch gekennzeichnet, dass** das mindestens eine Abstandselement (25) mit einem Montageelement (37) verbunden und mittels des Montageelements (37) in der Haltestruktur positioniert und mit dieser verklebt wird und anschließend die Batteriezelle (9) mit dem mindestens einen Abstandselement (25) verklebt wird.
